# EUROPÄISCHE PATENTSCHRIFT

(11) **EP 2 772 373 B1**
(45) Veröffentlichungstag und Bekanntmachung des Hinweises auf die Patenterteilung: **21.11.2018**
(21) Anmeldenummer: 14157026.7
(22) Anmeldetag: 27.02.2014
(51) Int. Cl.: B60G 17/02, F15B 13/04, F15B 11/042, F15B 11/00, F15B 13/044

(54) **Proportional-Wegeventil sowie hydraulische Schaltung und hydropneumatisches Federungssystem mit einem derartigen Ventil**
Proportional directional valve and hydraulic circuit and hydropneumatic suspension system with such a valve
Distributeur proportionnel, circuit hydraulique et système de suspension hydropneumatique doté d'un tel distributeur

(30) Priorität: 01.03.2013 DE 102013102069
(43) Veröffentlichungstag der Anmeldung: 03.09.2014
(73) Patentinhaber: FSP Fluid Systems Partners Holding AG, 6340 Baar (CH)
(72) Erfinder: Bauer, Wolfgang, 69469 Weinheim (DE)
(74) Vertreter: Hoeger, Stellrecht & Partner Patentanwälte mbB

(56) Entgegenhaltungen:
- DE-A1- 19 719 076
- DE-C2- 4 423 541

## Beschreibung

Die Erfindung betrifft ein Proportional-Wegeventil zur Steuerung eines hydraulischen Verbrauchers, insbesondere zur Verwendung in einem hydropneumatischen Federungssystem, mit einem Gehäuse, das einen Druckanschluss zum Zuführen von unter Druck stehender Hydraulikflüssigkeit von einer Druckmittelquelle, einen Tankanschluss zum Abgeben von Hydraulikflüssigkeit an einen Vorratstank, sowie einen ersten und einen zweiten Arbeitsanschluss zum Anschließen an den hydraulischen Verbraucher aufweist, und mit einem Steuerelement, das im Gehäuse bewegbar gehalten ist, und mit einem Aktuator zum Bewegen des Steuerelements, wobei mittels des Steuerelements in Abhängigkeit von dessen Stellung relativ zum Gehäuse unterschiedliche Strömungspfade zwischen den Arbeitsanschlüssen und dem Druck- und Tankanschluss freigebbar sind und die Strömungsquerschnitte der Strömungspfade stufenlos in Abhängigkeit vom Stellweg des Steuerelements veränderbar sind.

Außerdem betrifft die Erfindung eine hydraulische Schaltung mit einem Hydraulikzylinder, der einen Zylinderkörper aufweist, in dessen Innenraum ein Kolben angeordnet ist, der einen Kolbenraum begrenzt, und mit einem Proportional-Wegeventil der eingangs genannten Art.

Darüber hinaus betrifft die Erfindung ein hydropneumatisches Federungssystem für veränderliche Federungslasten mit einem Proportional-Wegeventil, wie es voranstehend beschrieben wurde.

Proportional-Wegeventile dienen in der Hydraulik dazu, den Weg für die Hydraulikflüssigkeit freizugeben oder zu sperren oder die Durchflussrichtung der Hydraulikflüssigkeit zu ändern. Die Wegeventile weisen ein bewegbares Steuerelement auf, das in Abhängigkeit von seiner Stellung unterschiedliche Strömungspfade freigibt. Die Strömungsquerschnitte der Strömungspfade sind stufenlos in Abhängigkeit vom Stellweg des Steuerelements veränderbar. Damit der Stellweg nicht von auftretenden Drücken der Hydraulikflüssigkeit beeinflusst wird, ist das Steuerelement derart ausgestaltet, dass die in Bewegungsrichtung und entgegen der Bewegungsrichtung des Steuerelements auf das Steuerelement einwirkenden Druckkräfte, insbesondere die auf die Stirnflächen des Steuerelements einwirkenden Druckkräfte, sich gegenseitig aufheben. Mit Hilfe derartiger Proportional-Wegeventile können hydraulische Verbraucher gesteuert werden, insbesondere kann die Bewegung eines Hydraulikzylinders gesteuert werden, der einen Zylinderkörper aufweist, in dessen Innenraum ein Kolben mit einer aus dem Zylinderkörper herausragenden Kolbenstange angeordnet ist. Solche Hydraulikzylinder kommen beispielsweise bei hydropneumatischen Federungssystemen zum Einsatz, die insbesondere in Fahrzeugen mit veränderlichen Federungslasten, beispielsweise Traktoren mit Aufnahmemitteln für Anbaugeräte, Verwendung finden.

Bei hydropneumatischen Federungssystemen ist ein Hydraulikzylinder zwischen gefederten und ungefederten Massen des Fahrzeugs angeordnet. Der Hydraulikzylinder umfasst einen Kolbenraum, der mit einem Hydrospeicher verbunden ist und mit unter Druck stehender Hydraulikflüssigkeit beaufschlagt werden kann und die Federungslast trägt. Außerdem weist der Hydraulikzylinder einen Ringraum auf, der die Kolbenstange des Hydraulikzylinders abgedichtet umgibt.

Mit zunehmender Federungslast wird Hydraulikflüssigkeit aus dem Kolbenraum in den ersten Hydrospeicher gedrückt, so dass sich die Relativlage der gefederten und ungefederten Massen verändert. Die Veränderung der Relativlage wird von Sensoren erfasst, die mit einer elektrischen Steuereinheit verbunden sind. Die elektrische Steuereinheit steuert eine Ventileinrichtung derart, dass diese ihre Schaltstellung ändert und dadurch dem Kolbenraum so lange unter Druck stehende Hydraulikflüssigkeit zuführt, bis eine vorgegebene Relativlage wieder erreicht ist. Bei abnehmender Federungslast fließt Hydraulikflüssigkeit aus dem Hydrospeicher in den Kolbenraum, so dass sich die Relativlage der gefederten und ungefederten Massen erneut verändert. Die Veränderung der Relativlage wird wieder erfasst, so dass die Ventileinrichtung erneut ihre Schaltstellung ändert und aus dem Kolbenraum Hydraulikflüssigkeit abfließen kann.

Derartige Ventileinrichtungen für hydropneumatische Federungssysteme weisen üblicherweise entweder zwei Wegeventile mit jeweils einem Elektromagneten als Aktuator und mit jeweils zwei Schaltstellungen oder ein einziges Wegeventil mit zwei Elektromagneten und mit drei Schaltstellungen auf. Ein hydropneumatisches Federungssystem mit zwei Wegeventilen ist aus der Veröffentlichung DE 101 07 631 A1 bekannt. Die beiden Wegeventile umfassen jeweils eine Magnetspule, mit deren Hilfe ein Steuerelement in einem Gehäuse zwischen einer ersten Schaltstellung und einer zweiten Schaltstellung entgegen einer federelastischen Rückstellkraft bewegt werden kann.

Die Veröffentlichung DE 197 19 076 A1 beschreibt ein hydropneumatisches Federungssystem, bei dem ein einziges Wegeventil vorgesehen ist, dessen Steuerelement von einer mittigen Neutralstellung, in der sämtliche Arbeitsanschlüsse mit dem Tankanschluss verbunden sind, jeweils durch Aktivierung einer Magnetspule in eine Arbeitsstellung überführt werden kann. In einer ersten Arbeitsstellung, die vom Steuerelement ausgehend von der Neutralstellung durch Bewegen in eine erste Betätigungsrichtung erreicht werden kann, sind einer der beiden Arbeitsanschlüsse mit dem Tankanschluss und der andere Arbeitsanschluss mit dem Druckanschluss verbunden. In einer zweiten Arbeitsstellung, die vom Steuerelement durch Bewegen in eine der ersten Betätigungsrichtung entgegengerichteten zweiten Betätigungsrichtung eingenommen werden kann, sind beide Arbeitsanschlüsse mit dem Druckanschluss verbunden.

Aus dem Dokument DE 44 23 541 C2 ist ein Proportional-Druckregelventil bekannt mit einem Gehäuse, das einen Druckanschluss, einen Rücklaufanschluss, einen Steueranschluss und einen weiteren Anschluss aufweist. Im Gehäuse ist ein Regelkolben bewegbar gehalten. Der Regelkolben ist mittels eines Proportionalmagneten gegen eine Feder und gegen einen Steuerdruck verstellbar. Der Steuerdruck wirkt gegen eine Stirnseite des Regelkolbens. Das Proportional-Druckregelventil ist ein Druckminderventil, bei dem der Druck am Steueranschluss durch die Bestromung des Proportionalmagneten einstellbar und auf einem konstanten Wert haltbar ist. Zu diesem Zweck hat das Proportional-Druckregelventil eine Regelfunktion, mit der es den Steueranschluss entweder mit dem Druckanschluss oder mit dem Rücklaufanschluss verbindet. Zusätzlich weist das Proportional-Druckregelventil eine Wegefunktion auf, bei der der weitere Anschluss ohne nennenswerten Übergang entweder mit dem Druckanschluss oder mit dem Rücklaufanschluss verbunden wird.

Aufgabe der vorliegenden Erfindung ist es, ein Proportional-Wegeventil der eingangs genannten Art derart weiterzubilden, dass es eine vereinfachte Steuerung eines hydraulischen Verbrauchers ermöglicht, wobei mittels des Proportional-Wegeventils insbesondere ein hydropneumatisches Federungssystem konstruktiv einfacher ausgestaltet werden kann.

Diese Aufgabe wird durch ein Proportional-Wegeventil mit den Merkmalen von Patentanspruch 1 gelöst.

Beim erfindungsgemäßen Proportional-Wegeventil kommt lediglich ein einziger Aktuator zum Einsatz, mit dessen Hilfe das Steuerelement relativ zum Gehäuse in einer bestimmten Betätigungsrichtung bewegt werden kann. Das Steuerelement kann eine erste Schaltstellung einnehmen, in der der erste Arbeitsanschluss und der zweite Arbeitsanschluss mit dem Tankanschluss in Strömungsverbindung stehen, und ausgehend von dieser ersten Schaltstellung kann das Steuerelement vom Aktuator in einer vorgegebenen Betätigungsrichtung bewegt werden, wobei das Steuerelement aufeinanderfolgend zwei weitere Schaltstellungen einnehmen kann, in denen die Arbeitsanschlüsse nacheinander vom Tankanschluss abgetrennt und mit dem Druckanschluss verbunden werden. Die drei Schaltstellungen schließen sich unmittelbar aneinander an. In der ersten Schaltstellung sind beide Arbeitsanschlüsse mit dem Tankanschluss verbunden. In der zweiten Schaltstellung ist einer der beiden Arbeitsanschlüsse weiterhin mit dem Tankanschluss verbunden, wohingegen der andere Arbeitsanschluss mit dem Druckanschluss verbunden ist. In der dritten Schaltstellung sind beide Arbeitsanschlüsse mit dem Druckanschluss verbunden.

Das erfindungsgemäße Wegeventil weist somit einen konstruktiv einfachen Aufbau auf und kann kostengünstig hergestellt werden. Mit Hilfe eines einzigen Aktuators, der das Steuerelement ausgehend von einer ersten Schaltstellung in einer vorgegebenen Betätigungsrichtung bewegt, kann das Steuerelement zunächst eine zweite Schaltstellung und anschließend durch Bewegen in derselben Betätigungsrichtung eine dritte Schaltstellung einnehmen, ohne dass hierzu ein zweiter Aktuator erforderlich ist.

In der ersten Schaltstellung sind die beiden Arbeitsanschlüsse mit dem Tankanschluss verbunden. Dies ermöglicht es, einen hydraulischen Verbraucher, beispielsweise einen Hydraulikzylinder, mittels des Proportional-Wegeventils vollständig zu entlasten. Durch Aktivieren des einzigen Aktuators kann das Steuerelement in eine zweite Schaltstellung bewegt werden, die sich unmittelbar an die erste Schaltstellung anschließt und in der einer der beiden Arbeitsanschlüssen mit dem Druckanschluss und der andere Arbeitsanschluss mit dem Tankanschluss verbunden ist. Eine weitere Bewegung in derselben Richtung führt das Steuerelement in eine dritte Schaltstellung, in der beide Arbeitsanschlüsse mit dem Druckanschluss verbunden sind. Die Strömungspfade zwischen den Arbeitsanschlüssen und dem Druckanschluss werden somit beim Übergang des Steuerelements aus seiner ersten Schaltstellung über seine zweite Schaltstellung in die dritte Schaltstellung nacheinander freigegeben, wobei sich der Strömungsquerschnitt der Strömungspfade kontinuierlich ändert.

Bei einer Bewegung des Steuerelements in der vorgegebenen Betätigungsrichtung können sich die Strömungsquerschnitte der Strömungspfade, über die die Arbeitsanschlüsse mit dem Tankanschluss verbunden sind, bis auf einen Wert Null verringern, wobei dieser Wert von den beiden Strömungspfade nacheinander, d.h. nach Überschreiten unterschiedlicher Stellwege des Steuerelements, erreicht wird, und anschließend können sich die Strömungsquerschnitte der Strömungspfade, über die die Arbeitsanschlüssen mit dem Druckanschluss verbunden sind, ausgehend von einem Wert Null erhöhen.

Das erfindungsgemäße Proportional-Wegeventil ermöglicht es, mit einem verhältnismäßig geringen Hub des Steuerelements ohne eine Vielzahl von Zwischenstellungen nacheinander in vorgebbarer und reproduzierbarer Weise Strömungspfade mit einem bestimmten Strömungsquerschnitt zwischen den Arbeitsanschlüssen und dem Druck- und Tankanschluss freizugeben.

Das erfindungsgemäße Wegeventil eignet sich insbesondere für den Einsatz in hydropneumatischen Federungssystemen für veränderliche Federungslasten, denn hierbei kann eine der beiden Arbeitsanschlüsse mit dem Kolbenraum und der andere Arbeitsanschluss mit dem Ringraum eines als doppeltwirkender Hydraulikzylinder ausgestalteten Federungszylinders verbunden werden.

Wie bereits erläutert, ist der Strömungsquerschnitt der Strömungspfade zwischen den Arbeitsanschlüssen und dem Druck- und Tankanschluss stufenlos in Abhängigkeit vom Stellweg des Steuerelements veränderbar. Ausgehend von einer ersten Schaltstellung, in der das Steuerelement eine vorgegebene Position relativ zum Gehäuse einnimmt, kann der Strömungsquerschnitt der Strömungspfade zwischen den Arbeitsanschlüssen und dem Druck- und Tankanschluss stufenlos in Abhängigkeit vom Stellweg verändert werden, den das Steuerelement ausgehend von der ersten Schaltstellung zurücklegt. Die stufenlose Veränderung des Strömungsquerschnitts ermöglicht es, mit Hilfe des Wegeventils nicht nur die Bewegungsrichtung sondern auch die Bewegungsgeschwindigkeit eines hydraulischen Verbrauchers, insbesondere eines doppeltwirkenden Hydraulikzylinders, zu steuern. Die Steuerung der Bewegungsgeschwindigkeit erfolgt hierbei mittels des einen Aktuators, der beim erfindungsgemäßen Wegeventil zum Einsatz kommt.

Das Steuerelement des erfindungsgemäßen Wegeventils ist günstigerweise linear bewegbar.

Insbesondere kann vorgesehen sein, dass das Steuerelement in Form eines Steuerkolbens ausgestaltet ist, der in einer Steuerbohrung des Gehäuses mittels des Aktuators geradlinig verschoben werden kann.

Der Aktuator ist günstigerweise elektrisch aktivierbar. Beispielsweise kann vorgesehen sein, dass das erfindungsgemäße Wegeventil als Aktuator einen Elektromagneten umfasst, mit dessen Hilfe das Steuerelement relativ zum Gehäuse bewegt werden kann.

Alternativ oder ergänzend kann vorgesehen sein, dass der Aktuator hydraulisch, pneumatisch, mechanisch oder manuell betätigbar ist.

Bei einer vorteilhaften Ausgestaltung der Erfindung ist das Steuerelement mittels des Aktuators entgegen der Wirkung einer federelastischen Rückstellkraft aufeinanderfolgend in die verschiedenen Schaltstellungen bewegbar. Insbesondere kann das Wegeventil eine Rückstellfeder aufweisen, die einer Betätigungskraft des Aktuators entgegenwirkt. Hierbei kann vorgesehen sein, dass das Wegeventil nur eine einzige Rückstellfeder aufweist, die günstigerweise auf der dem Aktuator abgewandten Seite des Steuerelements angeordnet ist.

Wie bereits erwähnt, ist es von Vorteil, wenn das Steuerelement als Steuerkolben ausgestaltet ist, der in einer Steuerbohrung des Gehäuses mittels des Aktuators geradlinig verschiebbar ist. Der Steuerkolben kann mehrere Nuten aufweisen, die in axialer Richtung versetzt zueinander angeordnet sind und mit Ventilkammern zusammenwirken, die mit einem Druck-, Tank-oder Arbeitsanschluss in Strömungsverbindung stehen.

Wie bereits erwähnt, eignet sich das erfindungsgemäße Wegeventil zur Steuerung eines Hydraulikzylinders. Die Erfindung betrifft deshalb auch eine Hydraulikschaltung mit einem derartigen Hydraulikzylinder, der einen Zylinderkörper aufweist mit einem Innenraum, in dem ein Kolben angeordnet ist, wobei der Kolben einen Kolbenraum begrenzt. Um den Hydraulikzylinder auf konstruktiv einfache Weise steuern zu können, weist die hydraulische Schaltung ein Proportional-Wegeventil der voranstehend erläuterten Art auf, wobei der erste Arbeitsanschluss des Proportional-Wegeventils über eine Arbeitsleitung mit dem Kolbenraum in Strömungsverbindung steht und in die Arbeitsleitung ein Rückschlagventil geschaltet ist, das in Richtung des Kolbenraums öffnet und das in Abhängigkeit von dem am zweiten Arbeitsanschluss des Proportional-Wegeventils herrschenden Druck entsperrbar ist.

Vorzugsweise ist das Rückschlagventil hydraulisch entsperrbar.

Nimmt das Proportional-Wegeventil seine erste Schaltstellung ein, so sind beide Arbeitsanschlüsse mit dem Tankanschluss verbunden und damit von Druck entlastet und das Rückschlagventil nimmt seine Sperrstellung ein, so dass keine Hydraulikflüssigkeit aus dem Kolbenraum entweichen kann. Nimmt das Proportional-Wegeventil seine zweite Schaltstellung ein, so bleibt der erste Arbeitsanschluss mit dem Tankanschluss verbunden, der zweite Arbeitsanschluss steht jedoch mit dem Druckanschluss in Strömungsverbindung, so dass am zweiten Arbeitsanschluss unter Druck stehende Hydraulikflüssigkeit anliegt. Der am zweiten Arbeitsanschluss anliegende Druck hat zur Folge, dass das entsperrbare Rückschlagventil öffnet und dadurch die Strömungsverbindung vom Kolbenraum über die Arbeitsleitung, den ersten Arbeitsanschluss und den Tankanschluss zum Tank freigibt. Dadurch kann in der zweiten Schaltstellung des Proportional-Wegeventils Hydraulikflüssigkeit aus dem Kolbenraum abfließen und der Hydraulikzylinder bei einer Belastung des Kolbens eine Einfahrbewegung ausführen. Nimmt das Proportional-Wegeventil seine dritte Schaltstellung ein, so ist auch der erste Arbeitsanschluss mit dem Druckanschluss verbunden und unter Druck stehende Hydraulikflüssigkeit kann von einer Druckmittelquelle über den Druckanschluss, den ersten Arbeitsanschluss und die Arbeitsleitung dem Kolbenraum zugeführt werden. Der Hydraulikzylinder kann dadurch eine Ausfahrbewegung ausführen.

Die voranstehend erläuterte hydraulische Schaltung ermöglicht es somit auf kostengünstige Weise, den Hydraulikzylinder mit vorgebbarer Geschwindigkeit einzufahren und auszufahren, wobei zur Steuerung nur ein Aktuator aktiviert werden muss.

Bei einer besonders vorteilhaften Ausführungsform weist die Hydraulikschaltung als Druckmittelquelle ein Load-Sensing-Versorgungssystem auf, das mit dem Druckanschluss des Proportional-Wegeventils in Strömungsverbindung steht, und stromaufwärts des entsperrbaren Rückschlagventils ist ein Ventil in die Arbeitsleitung geschaltet, das in Abhängigkeit von der in der Arbeitsleitung herrschenden Strömungsrichtung der Hydraulikflüssigkeit eine Strömungsverbindung zwischen der Arbeitsleitung und einem Steuereingang des Load-Sensing-Versorgungssystems freigibt oder unterbricht. Das Load-Sensing-Versorgungssystem, beispielsweise eine Load-Sensing-Pumpe oder eine Konstantpumpe mit Unloader-Schaltung, liefert an den Druckanschluss des Proportional-Wegeventils unter Druck stehende Hydraulikflüssigkeit. Die Förderleistung des Load-Sensing-Versorgungssystems hängt von dem an seinem Steuereingang herrschenden Druck ab. Der Steuereingang steht mit einem stromaufwärts des entsperrbaren Rückschlagventils gelegenen Bereich der Arbeitsleitung in Strömungsverbindung, wobei die Strömungsverbindung in Abhängigkeit von der in der Arbeitsleitung herrschenden Strömungsrichtung von einem Ventil freigegeben und unterbrochen wird. Die gibt die Möglichkeit, den Steuereingang des Load-Sensing-Versorgungssystems nur dann mit der Arbeitsleitung zu verbinden und mit dem in der Arbeitsleitung herrschenden Druck zu beaufschlagen, wenn die Hydraulikflüssigkeit in der Arbeitsleitung vom ersten Arbeitsanschluss zum entsperrbaren Rückschlagventil und über dieses zum Kolbenraum fließt. Die Förderleistung des Load-Sensing-Versorgungssystems kann dann an den jeweiligen Bedarf des Kolbenraums angepasst werden. Fließt die Hydraulikflüssigkeit jedoch aus dem Kolbenraum hinaus und damit vom entsperrbaren Rückschlagventil zum ersten Arbeitsanschluss und von diesem über den Tankanschluss zum Tank, so ist eine druckabhängige Förderleistung des Load-Sensing-Versorgungssystems nicht erforderlich und die Strömungsverbindung zwischen der Arbeitsleitung und dem Steuereingang des Load-Sensing-Versorgungssystems kann mittels des von der Strömungsrichtung in der Arbeitsleitung abhängigen Ventils unterbrochen werden. Mangels Druckbelastung seines Steuereingangs geht dann das Load-Sensing-System in einen Standby-Betrieb über mit minimaler Förderleistung. Der Energieverbrauch und die Geräuschentwicklung des Load-Sensing-Versorgungssystems können dadurch gering gehalten werden.

Das erfindungsgemäße Proportional-Wegeventil ermöglicht es insbesondere, ein hydropneumatisches Federungssystem für veränderliche Federungslasten konstruktiv einfach auszugestalten. Ein erfindungsgemäßes hydropneumatisches Federungssystem umfasst einen Hydraulikzylinder, der einen Zylinderkörper aufweist, dessen Innenraum von einem Kolben mit einer aus dem Zylinderkörper herausragenden Kolbenstange in einen Kolbenraum und einen Ringraum unterteilt wird. Außerdem umfasst das erfindungsgemäße hydropneumatische Federungssystem mindestens einen ersten Hydrospeicher, der an den Kolbenraum angeschlossen ist und mindestens einen zweiten Hydrospeicher, der an den Ringraum angeschlossen ist, sowie ein Proportional-Wegeventil der voranstehend genannten Art, wobei der erste Arbeitsanschluss des Proportional-Wegeventils über eine erste Arbeitsleitung mit dem Kolbenraum in Strömungsverbindung steht, und wobei der zweite Arbeitsanschluss des Proportional-Wegeventils über eine zweite Arbeitsleitung mit dem Ringraum in Strömungsverbindung steht, und wobei in die erste Arbeitsleitung ein erstes entsperrbares Rückschlagventil geschaltet ist, das in Richtung des Kolbenraums öffnet, und wobei in die zweite Arbeitsleitung ein zweites entsperrbares Rückschlagventil geschaltet ist, das in Richtung des Ringraums öffnet.

Der Hydraulikzylinder bildet einen Federungszylinder aus, der zwischen gefederten und ungefederten Massen, beispielsweise eines Fahrzeugs oder auch einer ortsfesten Maschine, positioniert werden kann. Durch wahlweises Anheben und Absenken des Federungszylinders kann die Relativlage zwischen den gefederten und ungefederten Massen verändert werden. Der Einsatz des erfindungsgemäßen Proportional-Wegeventils ermöglicht hierbei eine sehr einfache konstruktive Ausgestaltung des hydropneumatischen Federungssystems, wobei nur ein Aktuator gesteuert werden muss, um wahlweise eine Anhebebewegung oder eine Absenkbewegung des Federungszylinders ausführen zu können. Die in die Arbeitsleitungen geschalteten Rückschlagventile stellen sicher, dass Hydraulikflüssigkeit nicht unbeabsichtigt aus dem Kolbenraum oder dem Ringraum abfließen kann. Ein solcher Abfluss von Hydraulikflüssigkeit kann allerdings bei Bedarf erreicht werden, in dem die Rückschlagventile entsperrt werden.

Es kann vorgesehen sein, dass zumindest eines der Rückschlagventile elektrisch entsperrbar ist. Hierzu kann das Rückschlagventil einen elektrischen Steuereingang aufweisen, der von einer elektrischen Steuereinheit mit einem elektrischen Steuersignal beaufschlagbar ist.

Von Vorteil ist es, wenn mindestens eines der Rückschlagventile hydraulisch entsperrbar ist. Bevorzugt sind das erste Rückschlagventil und das zweite Rückschlagventil hydraulisch entsperrbar.

Bei einer bevorzugten Ausgestaltung des erfindungsgemäßen hydropneumatischen Federungssystems ist das erste entsperrbare Rückschlagventil in Abhängigkeit von dem am zweiten Arbeitsanschluss herrschenden Druck entsperrbar. Dies gibt die Möglichkeit, das erste Rückschlagventil dadurch zu entsperren, dass das Proportional-Wegeventil seine zweite Schaltstellung einnimmt, in der der zweite Arbeitsanschluss mit dem am Druckanschluss herrschenden Druck beaufschlagt wird und in der der erste Arbeitsanschluss mit dem Tankanschluss verbunden ist. Das entsperrte Rückschlagventil gibt somit eine Strömungsverbindung vom Kolbenraum des Federungszylinders über die erste Arbeitsleitung, den ersten Arbeitsanschluss und den Tankanschluss zum Tank frei, so dass in der zweiten Schaltstellung des Proportional-Wegeventils aus dem Kolbenraum Hydraulikflüssigkeit entweichen kann.

Anstelle des entsperrbaren Rückschlagventils, welches druckentlastet sein kann oder nicht, kann auch ein hydraulisch steuerbares Druckbegrenzungsventil zum Einsatz kommen. Derartige Ventile sind dem Fachmann auch unter der Bezeichnung "Lasthalteventil" oder "Senkbremsventil" bekannt.

Günstig ist es, wenn das zweite entsperrbare Rückschlagventil in Abhängigkeit von dem am zweiten Arbeitsanschluss des Proportional-Wegeventils herrschenden Druck entsperrbar ist.

Die nachfolgende Beschreibung bevorzugter Ausführungsformen der Erfindung dient im Zusammenhang mit der Zeichnung der näheren Erläuterung. Es zeigen:
- Figur 1:: eine schematische Teilschnittansicht eines erfindungsgemäßen Proportional-Wegeventils mit einem Steuerkolben, der eine erste Relativstellung zu einem Gehäuse einnimmt;
- Figur 2:: eine Teilschnittansicht des Proportional-Wegeventils aus Figur 1, wobei der Steuerkolben eine zweite Relativstellung einnimmt;
- Figur 3:: eine Teilschnittansicht des Proportional-Wegeventils aus Figur 1, wobei der Steuerkolben eine dritte Relativstellung einnimmt;
- Figur 4:: eine Teilschnittansicht des Proportional-Wegeventils aus Figur 1, wobei der Steuerkolben eine vierte Relativstellung einnimmt;
- Figur 5:: eine vereinfachte Durchflusscharakteristik des Proportional-Wegeventils aus Figur 1;
- Figur 6:: einen Schaltplan einer erfindungsgemäßen hydraulischen Schaltung mit einem Hydraulikzylinder und einem Proportional-Wegeventil entsprechend Figur 1; und
- Figur 7:: einen Schaltplan eines erfindungsgemäßen hydropneumatischen Federungssystems mit einem Hydraulikzylinder und einem Proportional-Wegeventil entsprechend Figur 1.

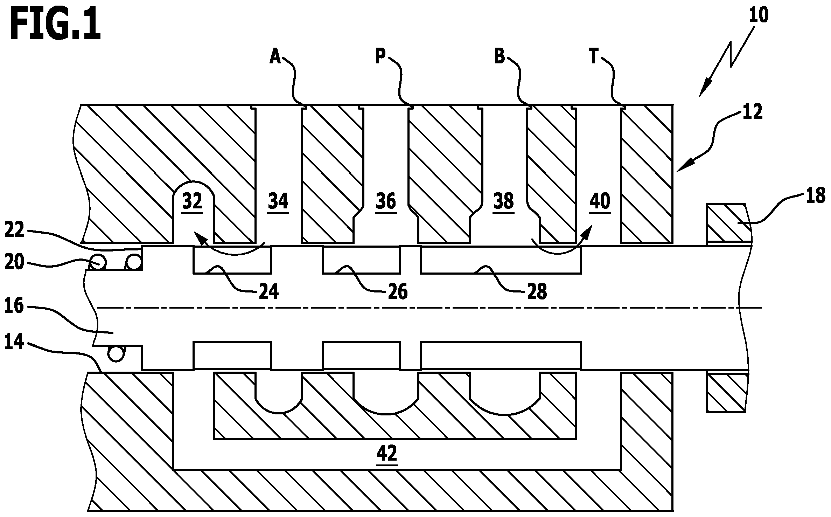

In Figur 1 ist schematisch eine vorteilhafte Ausführungsform eines erfindungsgemäßen Proportional-Wegeventils dargestellt, das insgesamt mit dem Bezugszeichen 10 belegt ist. Es umfasst ein Gehäuse 12 mit einer Steuerbohrung 14, in der ein Steuerelement in Form eines Steuerkolbens 16 linear verschiebbar gelagert ist. Der Steuerkolben 16 wirkt mit einem Aktuator zusammen, der im dargestellten Ausführungsbeispiel in Form einer Magnetspule 18 ausgestaltet ist, mit deren Hilfe der Steuerkolben 16 entgegen der Wirkung einer Rückstellfeder 20 in der Steuerbohrung 14 verschoben werden kann. Die Rückstellfeder 20 liegt einerseits an einer der Magnetspule 18 abgewandten Stufe 22 des Steuerkolbens 16 und andererseits an einer in der Zeichnung nicht dargestellten Stützfläche des Gehäuses 12 an.

Der Steuerkolben 16 weist mehrere in Längsrichtung verlaufende Nuten 24, 26 und 28 auf, die axial im Abstand zueinander angeordnet sind und mit Ventilkammern 32, 34, 36, 38 und 40 zusammenwirken, die im Abstand zueinander in das Gehäuse 12 eingeformt sind und den Steuerkolben 16 in Umfangsrichtung umgeben.

Eine erste Ventilkammer 32 steht über einen Verbindungskanal 42 mit einer fünften Ventilkammer 40 in Strömungsverbindung, die ihrerseits mit einem Tankanschluss des Proportional-Wegeventils 10 in Strömungsverbindung steht. Der Tankanschluss ist in der Zeichnung mit dem Buchstaben T bezeichnet.

Eine zweite Ventilkammer 34 steht mit einem ersten Arbeitsanschluss A in Strömungsverbindung, an den ein hydraulischer Verbraucher angeschlossen werden kann.

Eine dritte Ventilkammer 36 steht mit einem Druckanschluss P des Wegeventils 10 in Strömungsverbindung. An den Druckanschluss P kann eine Druckmittelquelle angeschlossen werden.

Eine vierte Ventilkammer 38 steht mit einem zweiten Arbeitsanschluss B des Wegeventils 10 in Strömungsverbindung. An den zweiten Arbeitsanschluss B kann ebenfalls ein hydraulischer Verbraucher angeschlossen werden.

Je nachdem, welche Relativlage der Steuerkolben 16 in der Steuerbohrung 1 einnimmt, werden unterschiedliche Strömungspfade zwischen den Arbeitsanschlüssen A und B und dem Druckanschluss P und dem Tankanschluss T freigegeben. Im unbestromten Zustand der Magnetspule 18 nimmt der Steuerkolben 16 seine in Figur 1 schematisch dargestellte Relativstellung ein. In dieser Stellung nimmt die erste Nut 24 eine Position zwischen der ersten Ventilkammer 32 und der zweiten Ventilkammer 34 ein, so dass der erste Arbeitsanschluss A über die zweite Ventilkammer 34, die erste Nut 24, die erste Ventilkammer 32, den Verbindungskanal 42 und die fünfte Ventilkammer 40 mit dem Tankanschluss T in Strömungsverbindung steht.

In der in Figur 1 dargestellten Relativstellung des Steuerkolbens 16 nimmt die dritte Nut 30 eine Position zwischen der vierten Ventilkammer 38 und der fünften Ventilkammer 40 ein, so dass der zweite Arbeitsanschluss B über die vierte Ventilkammer 38, die dritte Nut 30 und die fünfte Ventilkammer 40 ebenfalls mit dem Tankanschluss T in Strömungsverbindung steht.

Im Gegensatz zum Tankanschluss T steht der Druckanschluss P in der in Figur 1 dargestellten Relativstellung des Steuerkolbens 16 weder mit dem ersten Arbeitsanschluss A noch mit dem zweiten Arbeitsanschluss B in Strömungsverbindung.

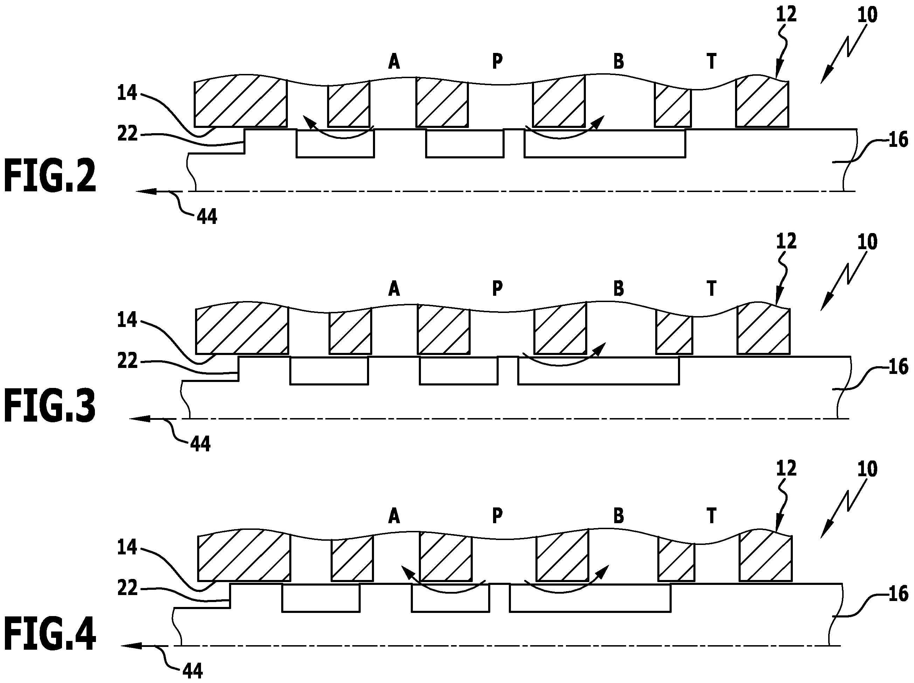

Wird der Steuerkolben 16 durch Strombeaufschlagung der Magnetspule 18 eine erste Wegstrecke entgegen der federelastischen Rückstellkraft der Rückstellfeder 20 in einer in den Figuren 2, 3 und 4 durch den Pfeil 44 veranschaulichten Betätigungsrichtung 44 bewegt, so wird die Strömungsverbindung zwischen dem ersten Arbeitsanschluss A und dem Tankanschluss T beibehalten, die Strömungsverbindung zwischen dem zweiten Arbeitsanschluss B und dem Tankanschluss T wird jedoch unterbrochen. Stattdessen wird die Strömungsverbindung zwischen dem Druckanschluss P und dem zweiten Arbeitsanschluss B freigegeben. Dies ist in Figur 2 dargestellt.

Wird der Steuerkolben 16 von der Magnetspule 18 weiter in der Betätigungsrichtung 44 bewegt, so wird die Strömungsverbindung zwischen dem ersten Arbeitsanschluss A und dem Tankanschluss T unterbrochen, die Strömungsverbindung zwischen dem Druckanschluss P und dem zweiten Arbeitsanschluss B wird jedoch beibehalten. Dies ist in Figur 3 dargestellt.

Eine weitere Bewegung des Steuerkolbens 16 in Betätigungsrichtung 44 hat zur Folge, dass der Druckanschluss P sowohl mit dem ersten Arbeitsanschluss A als auch mit dem zweiten Arbeitsanschluss B in Strömungsverbindung steht, wohingegen der Tankanschluss T von den Arbeitsanschlüssen A und B abgetrennt ist. Dies ist in Figur 4 dargestellt.

Durch eine lineare Bewegung des Steuerkolbens 16 in Betätigungsrichtung 44 können somit die beiden Arbeitsanschlüsse A und B ausgehend von einer ersten Schaltstellung, in der sie beide mit dem Tankanschluss T in Strömungsverbindung stehen, nacheinander vom Tankanschluss T abgetrennt und mit dem Druckanschluss P verbunden werden. Der Strömungsquerschnitt der jeweiligen Strömungspfade zwischen den Arbeitsanschlüssen A und B und dem Druckanschluss P und dem Tankanschluss T ändert sich hierbei stufenlos in Abhängigkeit vom Stellweg, den der Steuerkolben 16 in Betätigungsrichtung 44 ausgehend von seiner in Figur 1 dargestellten Relativstellung zurücklegt.

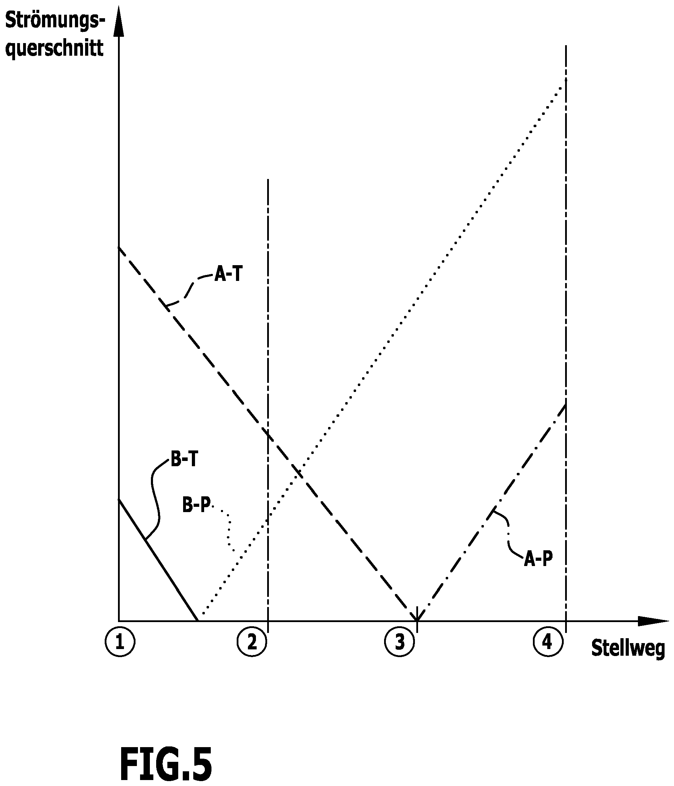

Die Durchflusscharakteristik des Proportional-Wegeventils 10, das heißt die Veränderung des Strömungsquerschnitts der verschiedenen Strömungspfade in Abhängigkeit vom Stellweg des Steuerkolbens 16, ist in Figur 5 schematisch dargestellt. Figur 5 zeigt ein Koordinatensystem, bei dem auf der X-Achse der Stellweg des Steuerkolbens 16 und auf der Y-Achse der Strömungsquerschnitt der verschiedenen Strömungspfade aufgetragen ist. Die in den Figuren 1 bis 4 veranschaulichten Stellungen des Steuerkolbens 16 relativ zum Gehäuse 12 sind in Figur 5 durch die jeweils von einem Kreis umgebenen Ziffern 1, 2, 3 und 4 veranschaulicht. Der Bereich zwischen den Stellungen 2 und 4 ist als der Hauptarbeitsbereich des Proportional-Wegeventils 10 anzusehen.

In Figur 5 veranschaulicht eine durchgezogene Linie B-T den Verlauf des Strömungsquerschnitts des Strömungspfades zwischen dem zweiten Arbeitsanschluss B und dem Tankanschluss T. An die durchgezogene Linie B-T schließt sich eine punktierte Linie B-P an, die den Verlauf des Strömungsquerschnitts des Strömungspfades zwischen dem zweiten Arbeitsanschluss B und dem Druckanschluss P veranschaulicht. Eine gestrichelte Linie A-T veranschaulicht den Verlauf des Strömungsquerschnitts des Strömungspfades zwischen dem ersten Arbeitsanschluss A und dem Tankanschluss T, und an die gestrichelte Linie A-T schließt sich in Figur 5 eine strichpunktierte Linie A-P an, die den Verlauf des Strömungsquerschnitts des Strömungspfads zwischen dem ersten Arbeitsanschluss A und dem Druckanschluss P in Abhängigkeit vom Stellweg des Steuerkolbens 16 veranschaulicht.

Wie aus Figur 5 deutlich wird, führt eine Bewegung des Steuerkolbens 16 in Betätigungsrichtung 44 ausgehend von der in Figur 1 dargestellten Relativstellung dazu, dass nach Überschreiten eines ersten Stellwegs zunächst der zweite Arbeitsanschluss B vom Tankanschluss T abgetrennt und mit dem Druckanschluss P verbunden wird, und dass nach Überschreiten eines weiteren Stellwegs auch der erste Arbeitsanschluss A vom Tankanschluss T abgetrennt und mit dem Druckanschluss P verbunden wird. Eine weitere Bewegung des Steuerkolbens 16 führt dann zu einer kontinuierlichen Vergrößerung des Strömungsquerschnitts der Strömungspfade. Ausgehend von einer ersten Schaltstellung, in der beide Arbeitsanschlüsse A und B mit dem Tankanschluss T in Strömungsverbindung stehen, wird somit zunächst der zweite Arbeitsanschluss B und anschließend auch der erste Arbeitsanschluss A mit dem Druckanschluss P verbunden. Eine erste Schaltstellung des Proportional-Wegeventils 10 entspricht somit einer Neutralstellung, in der beide Arbeitsanschlüsse A und B drucklos sind. In einer zweiten Schaltstellung des Proportional-Wegeventils 10 ist der erste Arbeitsanschluss A immer noch mit dem Tankanschluss T verbunden, wohingegen der zweite Arbeitsanschluss B bereits mit dem Druckanschluss P in Strömungsverbindung steht, und in einer dritten Schaltstellung sind beide Arbeitsanschlüsse A und B mit dem Druckanschluss P verbunden.

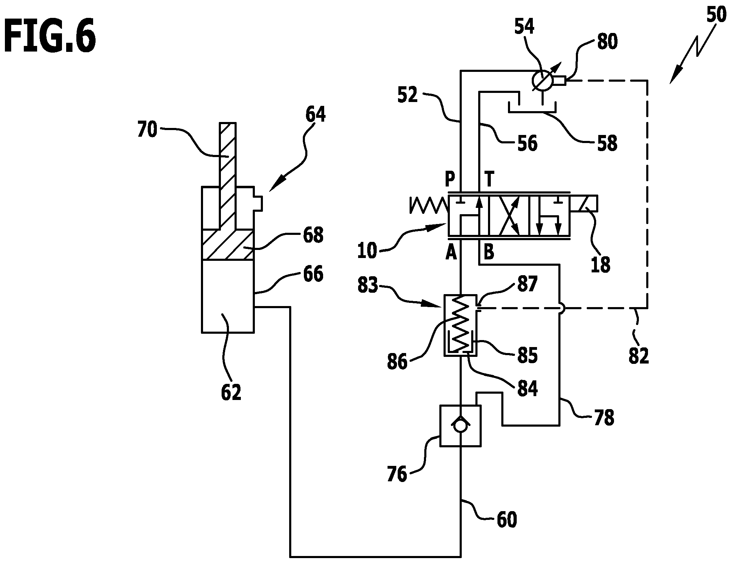

Das Proportional-Wegeventil 10 kommt insbesondere zur Steuerung eines Hydraulikzylinders zum Einsatz. Hierzu ist in Figur 6 schematisch eine hydraulische Schaltung 50 dargestellt, in der der Druckanschluss P des Proportional-Wegeventils 10 über eine Druckversorgungsleitung 52 mit einem Load-Sensing-Versorgungssystem, im dargestellten Ausführungsbeispiel mit einer Load-Sensing-Pumpe 54 verbunden ist. Der Tankanschluss T des Proportional-Wegeventils 10 ist über eine Rücklaufleitung 56 mit einem Vorratstank 58 verbunden.

Der erste Arbeitsanschluss A des Proportional-Wegeventils 10 ist bei der in Figur 6 dargestellten hydraulischen Schaltung über eine Arbeitsleitung 60 mit einem Kolbenraum 62 eines Hydraulikzylinders 64 verbunden. Der Hydraulikzylinder 64 weist einen Zylinderkörper 66 auf, in dessen Innenraum ein Kolben 68 mit einer aus dem Zylinderkörper 66 herausragenden Kolbenstange 70 angeordnet ist. Der Kolben 68 begrenzt den Kolbenraum 62.

In die Arbeitsleitung 60 ist ein Rückschlagventil 76 geschaltet, das in Richtung des Kolbenraums 62 öffnet und hydraulisch entsperrbar ist. Zum Entsperren ist das Rückschlagventil 76 über eine Ventilsteuerleitung 78 mit dem zweiten Arbeitsanschluss B verbunden.

Die Load-Sensing-Pumpe 54 weist einen Steueranschluss 80 auf, der über eine Pumpensteuerleitung 82 stromaufwärts des Rückschlagventils 76 mit der Arbeitsleitung 60 verbunden ist. Die Verbindung der Pumpensteuerleitung 82 mit der Arbeitsleitung 60 erfolgt über ein Ventil 83, das in die Arbeitsleitung 60 geschaltet ist und die Strömungsverbindung zwischen der Arbeitsleitung 60 und dem Steueranschluss 80 in Abhängigkeit von der Strömungsrichtung der Hydraulikflüssigkeit in der Arbeitsleitung 60 freigibt. Hierzu weist das Ventil 83 im dargestellten Ausführungsbeispiel eine in einem Ventilgehäuse verschiebbare Blende 84 auf, an die sich eine zylindrische Hülse 85 anschließt. Die Hydraulikflüssigkeit durchströmt das Ventilgehäuse. Strömt die Hydraulikflüssigkeit vom ersten Arbeitsanschluss A zum Rückschlagventil 76, so wird die Blende 84, unterstützt von einer Feder 86, soweit in Strömungsrichtung verschoben, dass die Hülse 85 einen Ventilanschluss 87 für die Pumpensteuerleitung 82 freigibt, so dass die Arbeitsleitung 60 über die Pumpensteuerleitung 82 mit dem Steueranschluss 80 in Strömungsverbindung steht. Strömt die Hydraulikflüssigkeit jedoch vom Rückschlagventil 76 zum ersten Arbeitsanschluss A, so wird die Blende 84 zusammen mit der Hülse 85 entgegen der Wirkung der Feder 86 in eine Stellung verschoben, in der die Hülse 85 den Ventilanschluss 87 verschließt, so dass die Strömungsverbindung von der Arbeitsleitung 60 zum Steueranschluss 80 unterbrochen ist.

Zum Einfahren und Ausfahren der Kolbenstange 70 kann die Magnetspule 18 des Wegeventils 10 von einer an sich bekannten und deshalb in der Zeichnung nicht dargestellten elektrischen Steuereinheit mit einem elektrischen Strom beaufschlagt werden.

Im stromlosen Zustand der Magnetspule 18 nimmt das Proportional-Wegeventil 10 eine erste Schaltstellung ein, in der beide Arbeitsanschlüsse A und B mit dem Tank verbunden sind und das Rückschlagventil 76 seine Sperrstellung einnimmt.

Wird der Steuerkolben 16 von der Magnetspule 18 in eine zweite Schaltstellung bewegt, so bleibt die Strömungsverbindung zwischen dem ersten Arbeitsanschluss A und dem Tank 58 aufrechterhalten, der zweite Arbeitsanschluss B wird jedoch mit dem Druckanschluss P verbunden. Dies hat zur Folge, dass das Rückschlagventil 76 über die Ventilsteuerleitung 78 mit Druck beaufschlagt wird und dadurch entsperrt. Im Kolbenraum 62 befindliche Hydraulikflüssigkeit kann dann über die Arbeitsleitung 60, das Rückschlagventil 76 und den ersten Arbeitsanschluss A zum Vorratstank 58 abfließen. Der Hydraulikkolben 64 kann dadurch eine Einfahrbewegung ausführen, deren Geschwindigkeit über den Strömungsquerschnitt des Strömungspfades zwischen dem ersten Arbeitsanschluss A und dem Tankanschluss T und damit über die von der Magnetspule 18 ausgeübte Kraft eingestellt werden kann. Hierbei ist der Steueranschluss 80 von der Arbeitsleitung 60 abgetrennt, so dass die Load-Sensing-Pumpe 54 mit verhältnismäßig geringem Energieverbrauch und geringer Geräuschentwicklung im Standby-Betrieb läuft.

Wird der Steuerkolben 16 in Betätigungsrichtung 44 aus seiner zweiten Schaltstellung in seine dritte Schaltstellung überführt, so steht nun auch der erste Arbeitsanschluss A mit dem Druckanschluss P in Strömungsverbindung, so dass dem Kolbenraum 62 über die Arbeitsleitung 60 Hydraulikflüssigkeit zugeführt werden kann. Dies hat zur Folge, dass der Hydraulikkolben 64 eine Ausfahrbewegung ausführt, deren Geschwindigkeit über den Strömungsquerschnitt des Strömungspfades zwischen dem ersten Arbeitsanschluss A und dem Druckanschluss P und damit über die von der Magnetspule 18 ausgeübte Kraft eingestellt werden kann. Gleichzeitig wird die Strömungsverbindung zwischen der Arbeitsleitung 60 und dem Steueranschluss 80 freigegeben, so dass der Steueranschluss 80 mit dem in der Arbeitsleitung stromaufwärts des Rückschlagventils 76 herrschenden Druck beaufschlagt wird und dadurch die Load-Sensing-Pumpe 54 ihre Förderleistung erhöht.

Mittels der Magnetspule 18 kann somit auf einfache Weise eine in ihrer Geschwindigkeit einstellbare Einfahrbewegung und Ausfahrbewegung der Kolbenstange 70 des Hydraulikzylinders 64 gesteuert werden.

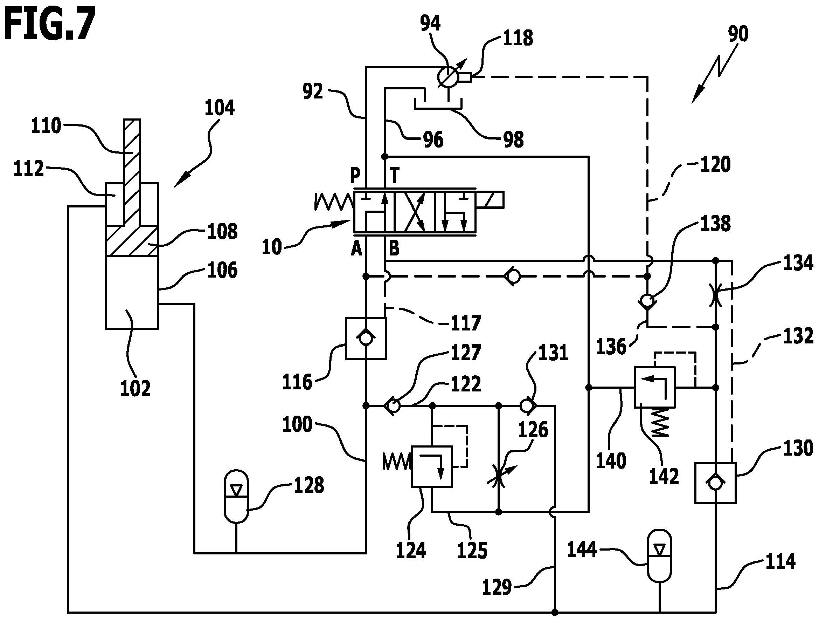

Das Proportional-Wegeventil 10 eignet sich insbesondere für den Einsatz in einem hydropneumatischen Federungssystem, wie es beispielsweise in Figur 7 dargestellt und insgesamt mit dem Bezugszeichen 90 belegt ist. Bei diesem Federungssystem kommt das voranstehend erläuterte Proportional-Wegeventil 10 zum Einsatz, dessen Druckanschluss P über eine Druckversorgungsleitung 92 mit einer Load-Sensing-Pumpe 94 verbunden ist, und dessen Tankanschluss T über eine Rücklaufleitung 96 mit einem Vorratstank 98 verbunden ist.

Der erste Arbeitsanschluss A des Proportional-Wegeventils 10 ist beim hydropneumatischen Federungssystem 90 über eine erste Arbeitsleitung 100 mit dem Kolbenraum 102 eines Hydraulikzylinders 104 verbunden. Der Hydraulikzylinder 104 weist einen Zylinderkörper 106 auf, der von einem Kolben 108 mit einer Kolbenstange 110 in den bereits erwähnten Kolbenraum 102 und einen die Kolbenstange 110 in Umfangsrichtung umgebenden Ringraum 112 unterteilt wird. Der Ringraum 112 steht über eine zweite Arbeitsleitung 114 mit dem zweiten Arbeitsanschluss B in Strömungsverbindung. In die erste Arbeitsleitung 100 ist ein erstes entsperrbares Rückschlagventil 116 geschaltet. Im dargestellten Ausführungsbeispiel ist das erste Rückschlagventil 116 hydraulisch entsperrbar in Abhängigkeit von dem in der zweiten Arbeitsleitung 114 herrschenden Druck. Hierzu ist ein Steuereingang des ersten Rückschlagventils 116 über eine erste Ventilsteuerleitung 117 mit dem zweiten Arbeitsanschluss B verbunden.

Die Load-Sensing-Pumpe 94 weist einen Steueranschluss 118 auf, der über eine Pumpensteuerleitung 120 stromaufwärts des ersten Rückschlagventils 116 mit der ersten Arbeitsleitung 100 in Strömungsverbindung steht.

Stromabwärts des ersten Rückschlagventils 116 zweigt von der ersten Arbeitsleitung 100 eine Druckbegrenzungsleitung 122 ab, die zu einem hydraulisch steuerbaren Druckbegrenzungsventil 124 führt. An das Druckbegrenzungsventil 124 schließt sich eine Tankleitung 125 an, die mit der Rücklaufleitung 96 verbunden ist. Parallel zum ersten Druckbegrenzungsventil 124 ist ein Drosselelement 126 geschaltet. In die Druckbegrenzungsleitung 122 ist ein Rückschlagventil 127 geschaltet, das in Richtung des ersten Druckbegrenzungsventils 124 öffnet. Stromaufwärts des ersten Druckbegrenzungsventils 124 zweigt von der Druckbegrenzungsleitung 122 eine Leitung 129 ab, die die Druckbegrenzungsleitung 122 mit der zweiten Arbeitsleitung 114 verbindet und in die ein weiteres Rückschlagventil 131 geschaltet ist, das in Richtung der Druckbegrenzungsleitung 122 öffnet.

Stromabwärts des ersten Rückschlagventils 116 ist an die erste Arbeitsleitung 100 ein erster Hydrospeicher 128 angeschlossen.

In die zweite Arbeitsleitung 114 ist ein zweites entsperrbares Rückschlagventil 130 geschaltet. Im dargestellten Ausführungsbeispiel ist das zweite Rückschlagventil 130 hydraulisch entsperrbar in Abhängigkeit von dem stromaufwärts des zweiten Rückschlagventils 130 in der zweiten Arbeitsleitung 114 herrschenden Druck. Hierzu ist ein Steuereingang des zweiten Rückschlagventils 130 über eine zweite Ventilsteuerleitung 132 mit dem stromaufwärts des zweiten Rückschlagventils 130 gelegenen Bereich der zweiten Arbeitsleitung 114 verbunden.

Stromaufwärts des zweiten Rückschlagventils 130 ist ein Drosselelement 134 in die zweite Arbeitsleitung 114 geschaltet, und im Bereich zwischen dem Drosselelement 134 und dem zweiten Rückschlagventil 130 zweigt von der zweiten Arbeitsleitung 114 eine Steuerleitung 136 ab, die zur Pumpensteuerleitung 120 führt und in die ein weiteres Rückschlagventil 138 geschaltet ist, das in Richtung Pumpensteuerleitung 120 öffnet.

Im Bereich zwischen dem Drosselelement 134 und dem zweiten entsperrbaren Rückschlagventil 130 ist die zweite Arbeitsleitung 114 über eine zweite Druckbegrenzungsleitung 140 mit der Tankleitung 125 verbunden. In die zweite Druckbegrenzungsleitung 140 ist ein zweites hydraulisch steuerbares Druckbegrenzungsventil 142 geschaltet.

Stromabwärts des zweiten entsperrbaren Rückschlagventils 130 ist an die zweite Arbeitsleitung 114 ein zweiter Hydrospeicher 144 angeschlossen.

Der Hydraulikzylinder 104 bildet in Kombination mit den beiden Hydrospeichern 128, 144 eine hydropneumatische Feder aus. Der Hydraulikzylinder 104 kann in bekannter Weise zwischen gefederten und ungefederten Massen beispielsweise eines Fahrzeugs oder einer Maschinenanlage angeordnet werden. Durch Zufuhr und Abfuhr von Hydraulikflüssigkeit aus dem Kolbenraum 102 und dem Ringraum 112 kann einer Veränderung der Relativlage der gefederten und ungefederten Massen entgegengewirkt werden. Mittels einer an sich bekannten und deshalb zur Erzielung einer besseren Übersicht in der Zeichnung nicht dargestellten elektrischen Steuereinheit kann die Magnetspule 18 des Proportional-Wegeventils 10 entsprechend gesteuert werden.

In einer ersten Schaltstellung des Proportional-Wegeventils 10 sind die Arbeitsanschlüsse A und B über den Tankanschluss T mit dem Vorratstank 98 verbunden und somit drucklos, und die Strömungsverbindungen zwischen dem Kolbenraum 102 und der ersten Arbeitsanschluss A und zwischen dem Ringraum 112 und dem zweiten Arbeitsanschluss B sind unterbrochen. Die Load-Sensing-Pumpe 94 arbeitet in dieser Schaltstellung des Proportional-Wegeventils im Standby-Betrieb.

Durch geeignete Strombeaufschlagung der Magnetspule 18 kann der Steuerkolben 16 des Proportional-Wegeventils 10 in eine zweite Schaltstellung überführt werden. In dieser bleibt die Strömungsverbindung zwischen dem ersten Arbeitsanschluss A und dem Tankanschluss T aufrecht erhalten, der zweite Arbeitsanschluss B wird aber mit dem Druckanschluss P verbunden, so dass der Steueranschluss 118 über die zweite Arbeitsleitung 114, die Steuerleitung 136 und die Pumpensteuerleitung 120 mit Druck beaufschlagt werden kann. Dies hat zur Folge, dass sich die Förderleistung und damit der Ausgangsdruck der Load-Sensing-Pumpe solange erhöht, bis das zweite entsperrbare Rückschlagventil 130 öffnet und dadurch dem Ringraum 112 Hydraulikflüssigkeit zugeführt werden kann, begrenzt durch das zweite Druckbegrenzungsventil 142. Gleichzeitig wird auch der Steuereingang des ersten entsperrbaren Rückschlagventils 116 mit dem am zweiten Arbeitsanschluss B herrschenden Druck beaufschlagt. Dies führt dazu, dass das erste Rückschlagventil 116 entsperrt und dadurch Hydraulikflüssigkeit vom Kolbenraum 102 über die erste Arbeitsleitung 100, den ersten Arbeitsanschluss A und den Tankanschluss T zum Vorratstank 98 abfließen kann. Die Kolbenstange 110 wird dadurch eingefahren und die Relativlage der gefederten Massen abgesenkt.

Ein Anheben der Kolbenstange 110 kann dadurch erzielt werden, dass sowohl dem Kolbenraum 102 als auch dem Ringraum 112 unter Druck stehende Hydraulikflüssigkeit zugeführt werden. Hierzu wird der Steuerkolben 16 von der Magnetspule 18 in seine dritte Schaltstellung überführt, in der beide Arbeitsanschlüsse A und B mit dem Druckanschluss P in Strömungsverbindung stehen. Dadurch wird zusätzlich zu der bereits in der zweiten Schaltstellung bestehenden Strömungsverbindung zwischen dem Druckanschluss P und dem zweiten Arbeitsanschluss B auch eine Strömungsverbindung zwischen dem Druckanschluss P und dem ersten Arbeitsanschluss A bereitgestellt. Dies hat zur Folge, dass sich vor dem entsperrbaren Rückschlagventil 116 ein Druck aufbaut, der gleichzeitig über ein Rückschlagventil zur Pumpensteuerleitung 120 und somit zum Steueranschluss 118 der Pumpe 94 übertragen wird. Die Pumpe 94 steigert dadurch ihren Ausgangsdruck so lange bis er ausreichend ist, dass Hydraulikflüssigkeit durch das hydraulisch entsperrbare Rückschlagventil 116 hindurchströmen und somit über die erste Arbeitsleitung 100 in den Kolbenraum 102 gelangen kann. Gleichzeitig ist auch die Strömungsverbindung zwischen dem Druckanschluss P und dem zweiten Arbeitsanschluss B geöffnet und es erfolgt eine Versorgung des Ringraumes 112 mit Hydraulikflüssigkeit, wie dies voranstehend bereits erläutert wurde. Da die von dem im Kolbenraum 102 herrschenden Druck beaufschlagte Fläche des Kolbens 108 größer ist als die von dem im Ringraum 112 herrschenden Druck beaufschlagte Fläche, hat dies ein Ausfahren der Kolbenstange 110 und somit ein Anheben der Relativlage der gefederten Massen zur Folge. Hydraulikflüssigkeit kann hierbei aus dem Ringraum 112 über das entsperrte Rückschlagventil 130 und das zweite Druckbegrenzungsventil 142 zur Tankleitung 125 und über diese zum Vorratstank 98 abfließen.

Das Proportional-Wegeventil 10 ermöglicht somit auf kostengünstige Weise eine in ihrer Geschwindigkeit verstellbare Lageregelung des Federungszylinders 104, wobei von einer elektrischen Steuereinheit nur eine einzige Magnetspule 18 mit einem Steuerstrom beaufschlagt werden muss.

## Patentansprüche

1. Proportional-Wegeventil zur Steuerung eines hydraulischen Verbrauchers (64; 104), mit einem Gehäuse (12), das einen Druckanschluss (P) zum Zuführen von unter Druck stehender Hydraulikflüssigkeit von einer Druckmittelquelle (54; 94), einen Tankanschluss (T) zum Abgeben von Hydraulikflüssigkeit an einen Vorratstank (58; 98) sowie einen ersten und einen zweiten Arbeitsanschluss (A, B) zum Anschließen an den hydraulischen Verbraucher (64; 104) aufweist, und mit einem Steuerelement (16), das im Gehäuse (12) bewegbar gehalten ist, und mit einem Aktuator (18) zum Bewegen des Steuerelements (16), wobei das Steuerelement (16) in Abhängigkeit von seiner Stellung relativ zum Gehäuse (12) unterschiedliche Strömungspfade zwischen den Arbeitsanschlüssen (A, B) und den Druck- und Tankanschlüssen (P, T) freigibt und die Strömungsquerschnitte der Strömungspfade stufenlos in Abhängigkeit vom Stellweg des Steuerelements (16) veränderbar sind, **dadurch gekennzeichnet, dass** das Wegeventil (10) einen einzigen Aktuator (18) aufweist und das Steuerelement (16) mittels des Aktuators (18) ausgehend von einer ersten Schaltstellung, in der beide Arbeitsanschlüsse (A, B) mit dem Tankanschluss (T) verbunden sind, über eine sich unmittelbar an die erste Schaltstellung anschließende zweite Schaltstellung in eine sich unmittelbar an die zweite Schaltstellung anschließende dritte Schaltstellung bewegbar ist, wobei durch einen Übergang des Steuerelements (16) von der ersten Schaltstellung über die zweite Schaltstellung in die dritte Schaltstellung die beiden Arbeitsanschlüsse (A, B) nacheinander vom Tankanschluss (T) abkoppelbar und mit dem Druckanschluss (P) verbindbar sind, wobei das Steuerelement (16) derart ausgestaltet ist, dass die in Bewegungsrichtung und entgegen der Bewegungsrichtung des Steuerelements (16) auf das Steuerelement (16) einwirkenden Druckkräfte der Hydraulikflüssigkeit sich gegenseitig aufheben.

2. Proportional-Wegeventil nach Anspruch 1, **dadurch gekennzeichnet, dass** das Steuerelement (16) linear bewegbar ist.

3. Proportional-Wegeventil nach Anspruch 1 oder 2, **dadurch gekennzeichnet, dass** der Aktuator (18) elektrisch aktivierbar ist.

4. Proportional-Wegeventil nach einem der voranstehenden Ansprüche, **dadurch gekennzeichnet, dass** das Steuerelement (16) mittels des Aktuators (18) entgegen der Wirkung einer federelastischen Rückstellkraft aufeinanderfolgend in die verschiedenen Schaltstellungen bewegbar ist.

5. Hydraulische Schaltung mit einem Hydraulikzylinder (64), der einen Zylinderkörper (66) aufweist, in dessen Innenraum ein Kolben (68) angeordnet ist, der einen Kolbenraum (62) begrenzt, **dadurch gekennzeichnet, dass** die hydraulische Schaltung ein Proportional-Wegeventil (10) nach einem der voranstehenden Ansprüche aufweist, wobei der erste Arbeitsanschluss (A) über eine Arbeitsleitung (60) mit dem Kolbenraum (62) in Strömungsverbindung steht und in die Arbeitsleitung ein Rückschlagventil (76) geschaltet ist, das in Richtung des Kolbenraums (62) öffnet und das in Abhängigkeit von dem am zweiten Arbeitsanschluss (B) des Wegeventils herrschenden Druck entsperrbar ist.

6. Hydraulische Schaltung nach Anspruch 5, **dadurch gekennzeichnet, dass** das Rückschlagventil (76) hydraulisch entsperrbar ist.

7. Hydraulische Schaltung nach Anspruch 5 oder 6, **dadurch gekennzeichnet, dass** der Druckanschluss (P) des Proportional-Wegeventils (10) mit einem Load-Sensing-Versorgungssystem (54) in Strömungsverbindung steht und stromaufwärts des Rückschlagventils (76) ein Ventil (83) in die Arbeitsleitung (60) geschaltet ist, das in Abhängigkeit von der in der Arbeitsleitung (60) herrschenden Strömungsrichtung der Hydraulikflüssigkeit eine Strömungsverbindung freigibt zwischen der Arbeitsleitung und einem Steuereingang (80) des Load-Sensing-Versorgungssystems (54).

8. Hydropneumatisches Federungssystem für veränderliche Federungslasten mit einem Hydraulikzylinder (104), der einen Zylinderkörper (106) aufweist, dessen Innenraum von einem Kolben (108) mit einer aus dem Zylinderkörper (106) herausragenden Kolbenstange (110) in einen Kolbenraum (102) und einen Ringraum (112) unterteilt wird, und mit mindestens einem ersten Hydrospeicher (128), der an den Kolbenraum (102) angeschlossen ist, und mindestens einem zweiten Hydrospeicher (144), der an den Ringraum (112) angeschlossen ist, **dadurch gekennzeichnet, dass** das hydropneumatische Federungssystem (90) ein Proportional-Wegeventil (10) nach einem der Ansprüche 1 bis 4 aufweist, wobei der erste Arbeitsanschluss (A) des Proportional-Wegeventils (10) über eine erste Arbeitsleitung (100) mit dem Kolbenraum (102) in Strömungsverbindung steht, und wobei der zweite Arbeitsanschluss (B) des Proportional-Wegeventils (10) über eine zweite Arbeitsleitung (114) mit dem Ringraum (112) in Strömungsverbindung steht, und wobei in die erste Arbeitsleitung (100) ein erstes entsperrbares Rückschlagventil (116) geschaltet ist, das in Richtung des Kolbenraums (102) öffnet, und wobei in die zweite Arbeitsleitung (114) ein zweites entsperrbares Rückschlagventil (130) geschaltet ist, das in Richtung des Ringraums (112) öffnet.

9. Hydropneumatisches Federungssystem nach Anspruch 8, **dadurch gekennzeichnet, dass** das erste Rückschlagventil (116) und/oder das zweite Rückschlagventil (130) hydraulisch entsperrbar sind.

10. Hydropneumatisches Federungssystem nach Anspruch 8 oder 9, **dadurch gekennzeichnet, dass** das erste entsperrbare Rückschlagventil (116) in Abhängigkeit von dem am zweiten Arbeitsanschluss (B) des Proportional-Wegeventils (10) herrschenden Druck entsperrbar ist.

11. Hydropneumatisches Federungssystem nach Anspruch 8, 9 oder 10, **dadurch gekennzeichnet, dass** das zweite entsperrbare Rückschlagventil (130) in Abhängigkeit von dem am zweiten Arbeitsanschluss (B) des Proportional-Wegeventils (10) herrschenden Druck entsperrbar ist.

## Claims

1. Proportional directional control valve for controlling a hydraulic consumer (64; 104), comprising a housing (12) that has a pressure port (P) for feeding pressurized hydraulic fluid from a pressure medium source (54; 94), a tank port (T) for discharging hydraulic fluid to a reservoir (58; 98), and a first and a second working port (A, B) for connecting to the hydraulic consumer (64; 104), and comprising a control element (16) that is movably held in the housing (12), and an actuator (18) for moving the control element (16), the control element (16), in dependence on its position relative to the housing (12), enabling different flow paths between the working ports (A, B) and the pressure port and the tank port (P, T), and the flow cross-sections of the flow paths being changeable in a continuously variable manner in dependence on the adjustment travel of the control element (16), **characterized in that** the directional control valve (10) has a single actuator (18), and the control element (16), starting from a first switching position in which both working ports (A, B) are connected to the tank port (T), is moveable by means of the actuator (18) via a second switching position that directly follows the first switching position, into a third switching position that directly follows the second switching position, and it is possible, by moving the control element (16) from the first switching position via the second switching position into the third switching position, to successively disconnect the two working ports (A, B) from the tank port (T) and to connect them to the pressure port (P), wherein the control element (16) is configured in such a way that the pressure forces of the hyraulic fluid acting on the control element (16) in the movement direction and against the movement direction of the control element (16) cancel one another out.

2. Proportional directional control valve in accordance with Claim 1, **characterized in that** the control element (16) is linearly movable.

3. Proportional directional control valve in accordance with Claim 1 or 2, **characterized in that** the actuator (18) is electrically activatable.

4. Proportional directional control valve in accordance with any one of the preceding Claims, **characterized in that** the control element (16) is successively movable against the action of a resiliently elastic restoring force into the different switching positions, by means of the actuator (18).

5. Hydraulic circuit comprising a hydraulic cylinder (64) that has a cylinder body (66), in the interior of which a piston (68) that delimits a piston chamber (62) is disposed, **characterized in that** the hydraulic circuit has a proportional directional control valve (10) in accordance with any one of the preceding Claims, the first working port (A) being in flow connection with the piston chamber (62) via a working line (60), and a check valve (76) being connected into the working line, the check valve (76) opening in the direction toward the piston chamber (62) and being releasable in dependence on the pressure prevailing at the second working port (B) of the directional control valve.

6. Hydraulic circuit in accordance with Claim 5, **characterized in that** the check valve (76) is hydraulically releasable.

7. Hydraulic circuit in accordance with Claim 5 or 6, **characterized in that** the pressure port (P) of the proportional directional control valve (10) is in flow connection with a load-sensing supply system (54), and a valve (83) is connected into the working line (60) upstream from the check valve (76), which valve, in dependence on the flow direction of the hydraulic fluid in the working line (60), enables a flow connection between the working line and a control input (80) of the load-sensing supply system (54).

8. Hydropneumatic suspension system for variable suspension loads, comprising a hydraulic cylinder (104) that has a cylinder body (106), the interior of which is divided into a piston chamber (102) and an annular chamber (112) by a piston (108) having a piston rod (110) that protrudes from the cylinder body (106), and comprising at least one first hydraulic accumulator (128) that is connected to the piston chamber (102), and at least one second hydraulic accumulator (144) that is connected to the annular chamber (112), **characterized in that** the hydropneumatic suspension system (90) has a proportional directional control valve (10) in accordance with any one of Claims 1 to 4, the first working port (A) of the proportional directional control valve (10) being in flow connection with the piston chamber (102) via a first working line (100), and the second working port (B) of the proportional directional control valve (10) being in flow connection with the annular chamber (112) via a second working line (114), and a first releasable check valve (116) that opens in the direction toward the piston chamber (102) being connected into the first working line (100), and a second releasable check valve (130) that opens in the direction toward the annular chamber (112) being connected into the second working line (114) .

9. Hydropneumatic suspension system in accordance with Claim 8, **characterized in that** the first check valve (116) and/or the second check valve (130) is/are hydraulically releasable.

10. Hydropneumatic suspension system in accordance with Claim 8 or 9, **characterized in that** the first releasable check valve (116) is releasable in dependence on the pressure prevailing at the second working port (B) of the proportional directional control valve (10).

11. Hydropneumatic suspension system in accordance with Claim 8, 9 or 10, **characterized in that** the second releasable check valve (130) is releasable in dependence on the pressure prevailing at the second working port (B) of the proportional directional control valve (10).

## Revendications

1. Distributeur à commande proportionnelle permettant de commander un consommateur hydraulique (64 ; 104), comprenant un carter (12), qui présente un raccord de pression (P) permettant d'amener un liquide hydraulique sous pression provenant d'une source de fluide sous pression (54 ; 94), un raccord de réservoir (T) permettant de distribuer un liquide hydraulique à un réservoir de stockage (58 ; 98) ainsi qu'un premier et un deuxième raccord de travail (A, B) aux fins de raccordement au consommateur hydraulique (64 ; 104), et comprenant un élément de commande (16), qui est retenu mobile dans le carter (12), et comprenant un actionneur (18) permettant de déplacer l'élément de commande (16), dans lequel l'élément de commande (16), en fonction de sa position par rapport au carter (12), libère différents trajets d'écoulement entre les raccords de travail (A, B) et les raccords de pression et de réservoir (P, T), et les sections d'écoulement des trajets d'écoulement peuvent être modifiées en continu en fonction de la course de réglage de l'élément de commande (16), **caractérisé en ce que** le distributeur (10) comprend un seul actionneur (18) et l'élément de commande (16) peut être déplacé au moyen de l'actionneur (18), à partir d'une première position de commutation, dans laquelle les deux raccords de travail (A, B) sont reliés au raccord de réservoir (T), en passant par une deuxième position de commutation située directement dans le prolongement de la première position de commutation, dans une troisième position de commutation située directement dans le prolongement de la deuxième position de commutation, dans lequel, à la suite d'un passage de l'élément de commande (16) de la première position de commutation dans la troisième position de commutation en passant par la deuxième position de commutation, les deux raccords de travail (A, B) peuvent successivement être découplés du raccord de réservoir (T) et être reliés au raccord de pression (P), dans lequel l'élément de commande (16) est conçu de telle manière que les forces de pression du liquide hydraulique agissant dans le sens de mouvement et à l'encontre du sens de mouvement de l'élément de commande (16) sur l'élément de commande (16) s'annulent mutuellement.

2. Distributeur à commande proportionnelle selon la revendication 1, **caractérisé en ce que** l'élément de commande (16) est mobile linéairement.

3. Distributeur à commande proportionnelle selon la revendication 1 ou 2, **caractérisé en ce que** l'actionneur (18) peut être activé électriquement.

4. Distributeur à commande proportionnelle selon l'une quelconque des revendications précédentes, **caractérisé en ce que** l'élément de commande (16) peut être déplacé successivement dans les différentes positions de commutation à l'encontre de l'action d'une force de rappel élastique au moyen de l'actionneur (18) .

5. Circuit hydraulique comprenant un cylindre hydraulique (64), qui comprend un corps cylindrique (66) dans l'espace intérieur duquel un piston (68) est agencé, qui délimite une chambre de piston (62), **caractérisé en ce que** le circuit hydraulique comprend un distributeur à commande proportionnelle (10) selon l'une quelconque des revendications précédentes, dans lequel le premier raccord de travail (A) est en liaison fluidique avec la chambre de piston (62) par l'intermédiaire d'une conduite de travail (60) et un clapet anti-retour (76), qui s'ouvre en direction de la chambre de piston (62) et qui peut être débloqué en fonction de la pression régnant sur le deuxième raccord de travail (B) du distributeur, est monté dans la conduite de travail.

6. Circuit hydraulique selon la revendication 5, **caractérisé en ce que** le clapet anti-retour (76) peut être débloqué hydrauliquement.

7. Circuit hydraulique selon la revendication 5 ou 6, **caractérisé en ce que** le raccord de pression (P) du distributeur à commande proportionnelle (10) est en liaison fluidique avec un système d'alimentation à détection de charge (54) et une soupape (83) est montée en amont du clapet anti-retour (76) dans la conduite de travail (60), laquelle soupape, en fonction du sens d'écoulement du liquide hydraulique régnant dans la conduite de travail (60), libère une liaison fluidique entre la conduite de travail et une entrée de commande (80) du système d'alimentation à détection de charge (54) .

8. Système de suspension hydropneumatique pour des charges de suspension variables, comprenant un cylindre hydraulique (104), qui présente un corps cylindrique (106) dont l'espace intérieur est divisé par un piston (108) pourvu d'une tige de piston (110) faisant saillie du corps cylindrique (106) en un espace de piston (102) et en un espace annulaire (112), et comprenant au moins un premier accumulateur hydraulique (128), qui est raccordé à la chambre de piston (102), et au moins un deuxième accumulateur hydraulique (144), qui est raccordé à l'espace annulaire (112), **caractérisé en ce que** le système de suspension hydropneumatique (90) comprend un distributeur à commande proportionnelle (10) selon l'une quelconque des revendications 1 à 4, dans lequel le premier raccord de travail (A) du distributeur à commande proportionnelle (10) est en liaison fluidique avec la chambre de piston (102) par l'intermédiaire d'une première conduite de travail (100), et dans lequel le deuxième raccord de travail (B) du distributeur à commande proportionnelle (10) est en liaison fluidique avec l'espace annulaire (112) par l'intermédiaire d'une deuxième conduite de travail (114), et dans lequel un premier clapet anti-retour (116) pouvant être débloqué, qui s'ouvre en direction de la chambre de piston (102), est monté dans la première conduite de travail (100), et dans lequel un deuxième clapet anti-retour (130) pouvant être débloqué, qui s'ouvre en direction de l'espace annulaire (112), est monté dans la deuxième conduite de travail (114).

9. Système de suspension hydropneumatique selon la revendication 8, **caractérisé en ce que** le premier clapet anti-retour (116) et/ou le deuxième clapet anti-retour (130) peuvent être débloqués de manière hydraulique.

10. Système de suspension hydropneumatique selon la revendication 8 ou 9, **caractérisé en ce que** le premier clapet anti-retour (116) pouvant être débloqué peut être débloqué en fonction de la pression régnant sur le deuxième raccord de travail (B) du distributeur à commande proportionnelle (10).

11. Système de suspension hydropneumatique selon la revendication 8, 9 ou 10, **caractérisé en ce que** le deuxième clapet anti-retour (130) pouvant être débloqué peut être débloqué en fonction de la pression régnant sur le deuxième raccord de travail (B) du distributeur à commande proportionnelle (10).
